# EUROPÄISCHE PATENTSCHRIFT

(11) **EP 1 847 171 B1**
(45) Veröffentlichungstag und Bekanntmachung des Hinweises auf die Patenterteilung: **13.02.2008**
(21) Anmeldenummer: 07007896.9
(22) Anmeldetag: 18.04.2007
(51) Int. Cl.: A01G 17/10

(54) **Seil zur Sicherung von Ästen in Baumkronen**
Rope for securing branches in treetops
Corde destinée à la sécurisation de branchages dans des couronnes d'arbre

(30) Priorität: 18.04.2006 DE 202006006554 U; 02.02.2007 DE 102007005295
(43) Veröffentlichungstag der Anmeldung: 24.10.2007
(73) Patentinhaber: Wessolly, Lothar, 70195 Stuttgart (DE)
(72) Erfinder: Wessolly, Lothar, 70195 Stuttgart (DE)
(74) Vertreter: Dreiss, Uwe

(56) Entgegenhaltungen:
- EP-B1- 0 623 277
- AT-B- 362 242
- DE-A1- 3 318 009
- DE-U1- 9 211 619
- DE-U1- 20 115 343
- US-A- 4 258 608

## Beschreibung

Die Erfindung betrifft ein Seilsystem aus zwei Seilen zur Sicherung von Ästen in Baumkronen gegen Beschädigung durch zu hohe Windlasten. Solche Seile sind als Hohlgeflecht aus mehreren Strängen ausgebildet, die aus einer Vielzahl von monofilen Fäden bestehen. Die Seile sind in unbelastetem Zustand durch Stauchung derart aufweitbar, dass zwischen den Strängen Öffnungen entstehen, durch die in den Innenkanal Ruckdämpfer und/oder Spreizbänder eingeschoben werden können.

### Stand der Technik

Ein derartiges Seil ist aus der EP 06 23 277 B1 bekannt. Weiterer Stand der Technik ergibt sich aus den Druckschriften "Zusätzliche Technische Vertragsbedingungen und Richtlinien für Baumpflege - ZTV Baumpflege", ISBN 3-934484-92-1, Ausgabe 2006; Spleissbuch, veröff. von der Fa. Geo. Gleistein und Sohn GmbH, 2877 Bremen (2005); Tauwerk für Industrie und Schifffahrt, ebenfalls veröff. von der Fa. Geo. Gleistein und Sohn (2005); L. Wessolly und H. Vetter, Kronensicherung von Bäumen, Stadt und Grün 48 (1999), Juli, S. 469-472 sowie in Neue Landschaft 2/95, S. 104-110; dieselben: Tips und Tricks bei der Kronensicherung von Bäumen, Neue Landschaft 10/98, S. 747-750; L. Wessolly, Kronensicherung in der ZTV 2006, bi GalaBau 1+2/06, S. 8-11; ders., Neue ZTV-Baumpflege-Kronensicherung, pro baum 4/2005; DIN 83 307, Rund- und spiralgeflochtene Spiralfaserseile (April 199) und DIN EN 701, Faserseile für allgemeine Verwendung (April 1999); DE 78 00 276 U; DE 83 14 582 U; DE 86 06 807 U; DE 70 39 199 A; E. Brudi u.a., Erfolgskontrolle des "cobra-Kronensicherungssystems", Neue Landschaft 44 (1999), S. 516-521. Weiterer Stand der Technik ergibt sich aus der DE 33 18 009 A1, der DE 92 11 619 U1, der AT 362 242 B, der DE 201 15 343 U1 und der US 4 258 608 A.

Der Stand der Technik gemäß der EP 0 623 277 wird im Folgenden anhand der Figuren 1 - 8 dargestellt. Es stellen dar:
- Figur 1: die Sicherung von Ästen in einer Baumkrone;
- Figur 2: ein Seil zwischen zwei Ästen;
- Figur 3: die Sicherung eines Seiles durch Spleiße;
- Figur 4: ein Stück Seil in unbelastetem Zustand;
- Figur 5: ein Stück Seil in gestauchtem Zustand;
- Figur 6: ein Stück Seil mit eingesetztem Ruckdämpfer;
- Figur 7: einen Ruckdämpfer;
- Figur 8: ein Spreizband.

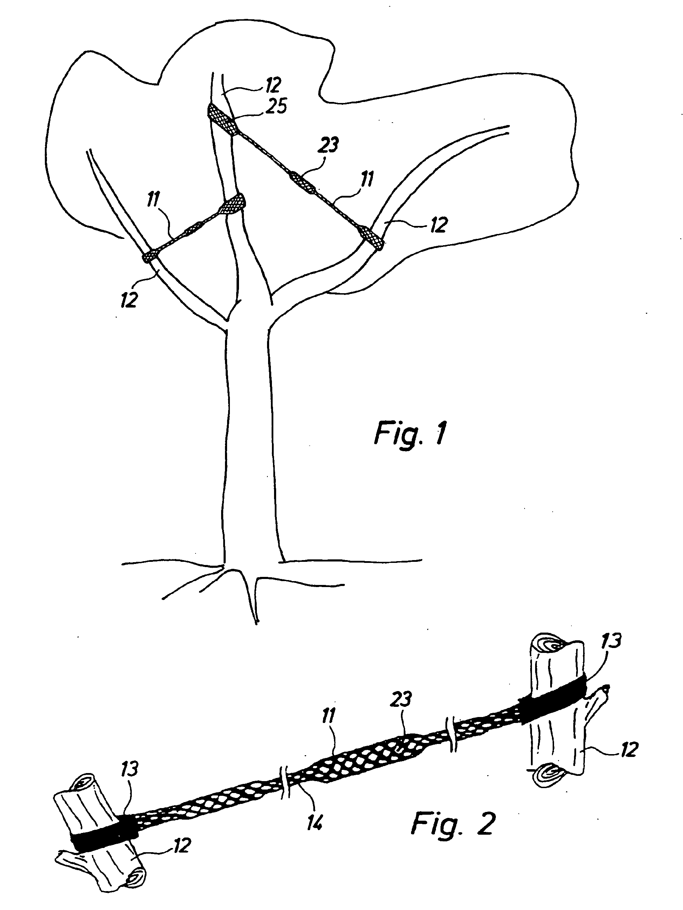

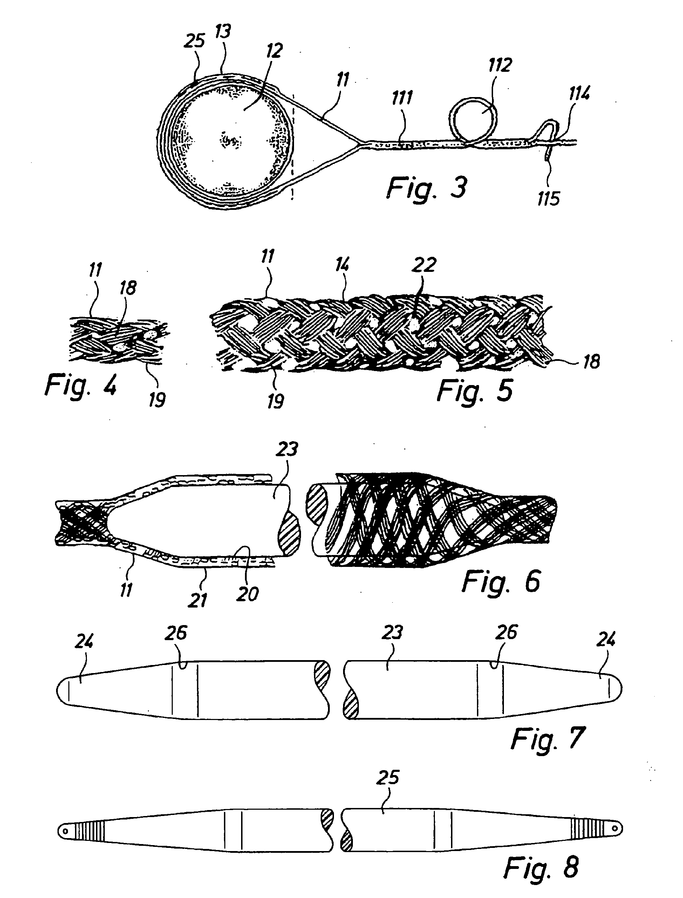

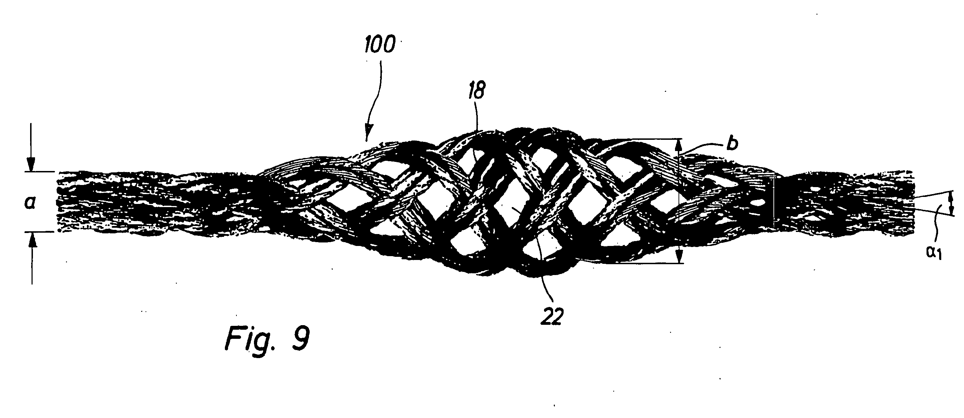

In den Figuren 1 und 2 verbinden Seile 11 Äste 12 zur elastischen Sicherung gegen Beschädigung bzw. Bruch durch zu hohe Windlasten. Im Bereich der Umschlingung der Äste 12 ist das Seil 11 von einer schlauchförmigen Scheuerschutzhülle 13 umgeben. In den Innenkanal 20 des Seils 11 ist ein Spreizband 25 eingeschoben, um eine möglichst großflächige Verteilung des Drucks des Seils auf die sensiblen Bereiche der Rinde (Cambium) zu erreichen. Die Sicherung des Seils 11 erfolgt durch einen Spleiß 111, bei dem das Seilende 115 durch eine bei Stauchung des Seils 11 entstehende Öffnung 22 in den Innenkanal 20 eingeschoben, dann zur Bildung einer Reserveschlaufe 112 wieder herausgeführt und mit einem Endspleiß 114 gesichert wird (vgl. ZTV-Baumpflege aaO, Abb. 9 auf S. 32). Das Seil 11 ist ein Hohlgeflecht(Hohltau) aus Strängen 18, die ihrerseits aus einer Vielzahl von monofilen Fäden 19 mit einer Dicke von je ca. 0,3 mm aus thermoplastischem Kunststoff, vorzugsweise Polypropylen, bestehen und durch Extrusion in einem Extruder hergestellt werden. Die Stränge 18 können durch Stauchung so aufgeweitet werden (Figur 5), dass ein hohler Innenkanal 20 mit größerem Durchmesser entsteht, der von einem Mantel 21 umgeben ist. Durch die Öffnungen 22 wird der Innenkanal 20 von außen zugänglich, wodurch Spreizband 25 und/oder Ruckdämpfer 23 eingeführt werden können.

Ein Ruckdämpfer 23 hat die Form eines langgestreckten Zylinders mit sich verjüngenden Enden 24 und besteht aus weichelastischem Material mit einer Shore-Härte von ca. 70°.

Die ZTV-Baumpflege (aaO, S. 69, Tab. 1) schreibt u.a. für bestimmte Basisdurchmesser des Baumes (bis zu 40 cm) eine Mindestbruchlast von 2,0 to und für Basisdurchmesser von 40 bis 60 cm eine Mindestbruchlast von 4,0 to vor (zur Definition s. dort).

Der Belastbarkeit entsprechend sind mehr oder weniger Fäden vorzusehen und damit für verschiedene Mindestbruchlasten die Durchmesser der Seile ebenfalls unterschiedlich. Das 2 to Seil hat einen Durchmesser in unbelastetem Zustand von ca. 1,5 cm, das 4 to Seil einen Durchmesser von ca. 2,5 cm. Entsprechend unterschiedlich groß sind die Innenkanäle 20 und somit auch die Ruckdämpfer 23, die Spreizbänder 25 und die Scheuerschutzhüllen 13 (vgl. Prospekt der Fa. pbs Baumsicherungsprodukte "cobra Seilsystem gemäß EU-Patent 623 277"[2005]).

### Die Aufgabe

Aufgabe der Erfindung ist es, die Kosten eines Seilsystems der eingangs genannten Art, bestehend aus Seil, Ruckdämpfer und Scheuerschutzhüllen, bereitzustellen, zu verringern.

### Die Lösung

Diese Aufgabe wird durch ein Seilsystem gemäß Anspruch 1 gelöst.

Die Erfindung betrifft ferner verschiedene vorteilhafte Weiterbildungen.

### Vorteile der Erfindung

Man braucht gemäß der Erfindung für verschiedene Seile, die für verschiedene Mindestbruchlasten ausgelegt sind, nur noch eine Größe von Spreizbändern, Ruckdämpfern und Scheuerschutzhüllen.

Damit wird eine erhebliche Einsparung in Lagerhaltung, Preis und Handhabung erreicht. Es ergibt sich somit eine Kreuz-Kompatibilität verschiedener Seile, insbesondere von Seilen mit Mindestbruchlasten von 2 to und 4 to gemäß ZTV-Baumpflege 2006.

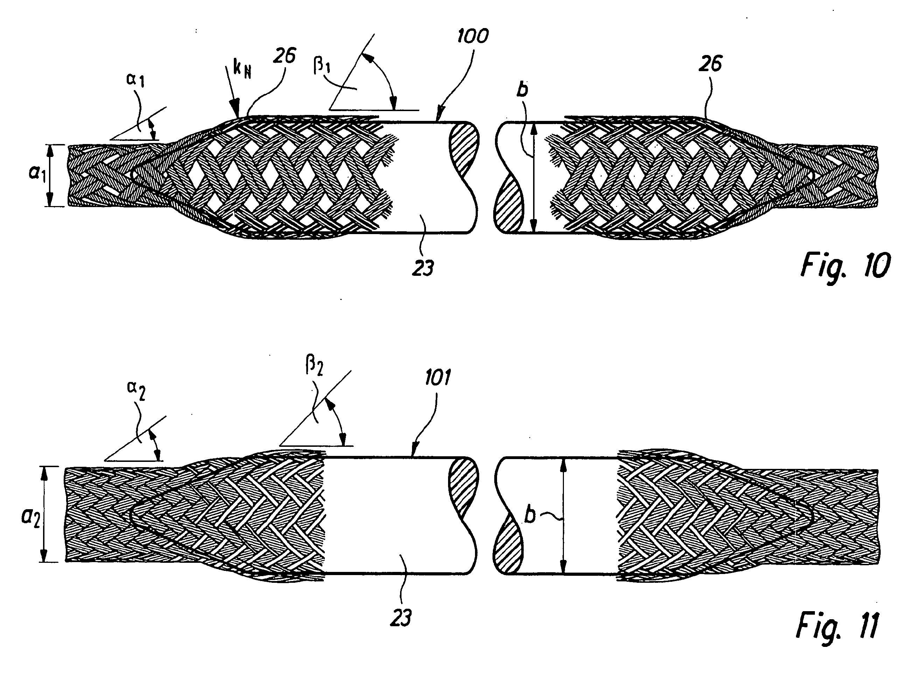

Diese Kreuz-Kompatibilität ergibt sich trotz gewisser Grenzen, die an sich durch die gegenseitige Abhängigkeit der Lasten und Abmessungen für jeden einzelnen Fall zu beachten sind. Sie folgen daraus, dass die bei Belastung auftretenden Normalkräfte K_{N} (vgl. Fig. 10 und 11) an den Übergangsbereichen 26 vom zylindrischen Abschnitt der Ruckdämpfer 23 zu den sich verjüngenden Enden 24 des Ruckdämpfers ausreichend groß sein müssen, um die Enden des zylindrischen Bereiches der Ruckdämpfer fest einzuspannen und den Ruckdämpfer bei Belastung auseinander zu ziehen, also zu dehnen. Ist die Flechtung zu locker, so werden sich die Fäden nicht entlang eines ausreichenden Längenstücks an diesen Übergangsbereich mit ausreichender Krümmung genügend fest anlegen. Daraus folgt wiederum, dass der Durchmesser des Ruckdämpfers immer ausreichend größer sein muss als der Durchmesser des unbelasteten Seils. Dabei muss die Flechtung jedoch in jedem Fall fest genug sein, damit sich die Stränge bereits im unbelasteten Zustand eng um den Ruckdämpfer legen, so dass sie bei Dehnung des Seils nicht an der Mantelfläche des Ruckdämpfers entlang rutschen. Die Aufweitbarkeit muss also für beide Seile gerade so groß genug sein, dass der Ruckdämpfer gerade noch hineinpasst. Daher sind zum Einführen des Ruckdämpfers auch eine Spezialbeschichtung oder Gleitmittel vorgesehen.

Im vorliegenden Beispiel hat es sich überraschenderweise herausgestellt, dass bei den beiden von der ZTV-Baumpflege 2006 vorgeschriebenen Mindestbruchlasten von 2 to und 4 to unter den beanspruchten Bedingungen eine Kreuz-Kompatibilität möglich ist.

Ein weiterer Vorteil folgt daraus, dass gemäß der Erfindung nunmehr auch für das Seil mit der Mindestmehrlast von 2 to größere Spreizbänder verwendet werden können, die zu einer um bis zu 60% niedrigeren Flächenpressung im Umschlingungsbereich eines Astes führen und damit eine bessere Schonung des sensiblen Rindenbereichs (Cambium) eines Baumes ermöglichen.

### Beschreibung der Ausführungsbeispiele

Ausführungsbeispiele der Erfindung werden im folgenden anhand der Figuren 9-13 beschrieben. Es stellen dar
- Figur 9: ein für eine Mindestbruchlast von 2 to ausgelegtes Seil in aufgeweitetem Zustand;
- Figur 10: das Seil nach Figur 9 mit eingeschobenem Ruckdämpfer;
- Figur 11: ein für eine Mindestbruchlast von 4 to ausgelegtes Seil mit demselben eingeschobenen Ruckdämpfer wie in Figur 10;

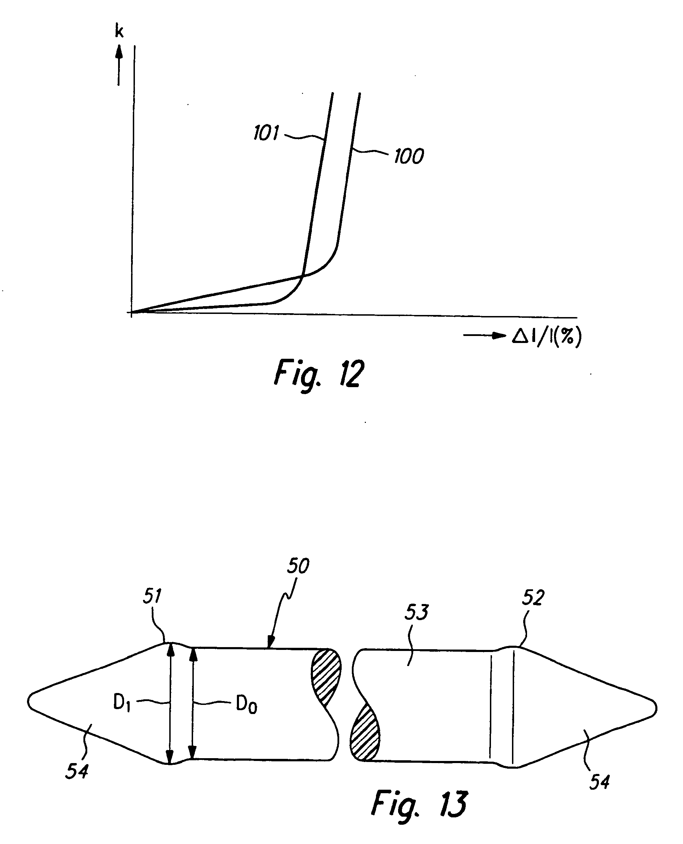

- Figur 12: ein Diagramm, das qualitativ die Abhängigkeit der Längenzunahme der Seile nach Figur 10, 11 mit eingeschobenem Ruckdämpfer zeigt;
- Figur 13: eine vorteilhafte Modifikation des Ruckdämpfers.

Das Seil 100 nach Figur 9 ist für eine Mindestbruchlast von 2 to ausgelegt, aber lockerer geflochten als die für eine solche Mindestbruchlast von 2 to nach dem Stand der Technik zur Verfügung stehenden Seile. Das Seil hat in unbelastetem Zustand einen Flechtwinkel α₁ = ca. 15° - 40°, vorzugsweise 15° - 20°, und einen Durchmesser a₁ von ca. 1,5 cm. Infolge der von dem Flechtwinkel α₁ bestimmten Flechtdichte ergibt sich eine Aufweitbarkeit bis auf einen Innenkanal mit einem Durchmesser von b = ca. 3,5 cm. Bei dieser Aufweitung ergeben sich Öffnungen 22, durch die ein Ruckdämpfer mit einem Durchmesser von ebenfalls 3,5 cm eingeführt werden kann (siehe Figur 10). Ruckdämpfer mit einem solchen Durchmesser sind auch für Seile geeignet, die für eine Mindestbruchlast von 4 to ausgelegt sind (siehe Figur 11). Ebenso können Spreizbänder mit einer Breite von 4,8 cm eingeführt werden.

Die Erfindung umfasst ein Seilsystem von zwei Seilen, bei denen das eine für eine erste Mindestbruchlast vom 2 to gemäß ZTV-Baumpflege 2006 und das zweite Seil auf eine Mindestbruchlast vom 4 to gemäß ZTV- Baumpflege 2006 ausgelegt ist, und das Seil für die geringere Mindestbruchlast einen Flechtwinkel aufweist, bei dem das Seil soweit aufweitbar ist, dass Spreizbänder und/oder Ruckdämpfer eingeführt werden können, wie sie auch für das zweite Seil geeignet sind, und dabei bei Belastung die Haftreibung der Seile die Enden des Ruckdämpfers fest einspannt und auseinander zieht.

Eine Verbesserung der geschilderten Wirkungsweise des Ruckdämpfers ergibt sich, wenn, wie aus Figur 13 ersichtlich, ein Ruckdämpfer 50 an den Übergangsbereichen 51 und 52 zu den beiden sich verjüngenden Enden 54 über nur ein kurzes Längenstück eine geringfügige radiale Erweiterung gegenüber dem dazwischenliegenden zylindrischen Bereich 53 aufweist derart, dass bei einem Durchmesser Dₒ des zylindrischen Bereichs von 3,3 cm der Durchmesser D₁ des erweiterten Bereichs 3,5 cm beträgt. Die Erweiterung des Durchmesser liegt also vorzugsweise in Bereich von 5 - 10 %. Damit wird erreicht, dass sich in den Übergangsbereichen eine deutlich gegenüber der restlichen Längserstreckung des Ruckdämpfers erhöhte Haftreibung ausbildet, die die geschilderte Dehnung des Ruckdämpfers bewirkt. Auch das Einführen des Ruckdämpfers wird durch den geringeren Durchmesser des zylindrischen Bereiches 53 leichter.

Die Aufweitung eines auf eine Mindestbruchlast von 2 to ausgelegten Seiles 100 mit einem Flechtwinkel von = 15 - 40° erfolgt, wie in Fig. 10 gezeigt, von einem Durchmesser a₁ = ca. 1,5 cm auf einen Durchmesser des Innenkanals b = ca. 3,5 cm. Der Winkel β₁ der Stränge 18 zur Längsachse ist größer als α₁ und liegt im aufgeweiteten Zustand im Bereich 20 - 60°. Das Seil 100 besteht aus 8 Doppelsträngen, also insgesamt 16 Strängen. Ein Strang besteht z.B. aus jeweils 55 monofilen Fäden mit einem Durchmesser von ca. 0,3 mm. Als die für die Belastbarkeit maßgebliche Größe wird allgemein das Gewicht pro Längeneinheit angegeben, da der Durchmesser der extrudierten einzelnen monofilen Fäden vom jeweiligen (einstellbaren) Druck im Extruder und der anschließenden Streckung abhängt. Bei einem ausgeführten Beispiel beträgt das Gewicht 8,5kg/100m. Die Fäden werden paarweise verdrillt und auf Spulen aufgewickelt. Die Spulen werden anschließend in die Klöppel einer Flechtmaschine eingebracht, zum Beispiel einer Flechtmaschinen der HERZOG Maschinenfabrik GmbH & Co. KG, D-26127 Oldenburg (siehe www.herzog-online.com). Der Flechtwinkel wird an der Maschine durch Einstellung der Abzugskraft, d.h. der Kraft, mit der das Seil aus der Flechtmaschine gezogen wird, eingestellt. Bei der Fertigung der Seile sind selbstverständlich auch die o.g. Normen zu beachten.

Figur 11 zeigt unter Verwendung desselben Ruckdämpfers 23 ein für eine Mindestbruchlast 4 to ausgelegtes Seil 101, dessen Durchmesser a₂ im unbelasteten Zustand ca. 2,5 cm beträgt. Dieses wird durch 22 Stränge, jeder bestehend aus je aus 60 monofilen Fäden, gebildet. Das Gewicht beträgt 13 kg/100m. Der Winkel α₂ ist größer als beim Seil 100 und beträgt 20° - 60°. Der Winkel β₂ ist größer als α₂ beim Seil 101 und auch größer als β₁ beim Seil 100. Er sollte im Bereich 30° - 70° liegen. Wichtig ist ganz allgemein, dass α₂ > α₁ ist.

Bei Belastung werden zunächst, wie in Figur 12 dargestellt, lediglich die Seile gestreckt, d.h. die Stränge richten sich stärker in Längsrichtung aus, soweit dies trotz Flechtung und Abhängigkeit vom Flechtwinkel möglich ist. Ein mit einem großen Winkel α (stumpfer Winkel) gewickeltes Seil ist stärker in Längsrichtung streckbar als ein mit einem kleinen Winkel α (spitzer Winkel) gewickeltes Seil. Mit zunehmender Belastung des Seils tritt dann in den Übergangsbereichen 26 zwischen den Strängen bzw. Fäden eines Seils und dem Ruckdämpfer Haftreibung ein. Das heißt, dass an diesen Stellen, an denen der Verlauf der Fäden der Krümmung der Außenfläche der Ruckdämpfer folgt, die Normalkräfte K_{N} auf die Übergangsbereiche der Ruckdämpfer so groß werden, dass das Seil die Enden des zylindrischen Bereichs der Ruckdämpfer 23 fest einspannt und auseinanderzieht. Der Ruckdämpfer wird also zwischen seinen Enden gedehnt.

Die Kurve für das Seil 100 ist in Figur 12 mit 100 und die Kurve fürs Seil mit 101 bezeichnet. Durch die Längsdehnung erfolgt eine Querkontraktion des Ruckdämpfers. Wenn die Enden des Ruckdämpfers eingespannt sind und den Ruckdämpfer dehnen, kann sich das Seil in dem dazwischen liegenden Bereich infolge der Querkontraktion strecken, ohne dass es Kraft aufnimmt. Diese Elastizität sorgt dafür, dass die natürliche Bewegung der gesicherten Bauteile nicht unterdrückt wird (dynamische Kronensicherung). Wenn die Längsdehnung und die Querkontraktion des Ruckdämpfers aufgebraucht sind, wird die Tragfähigkeit des Systems durch die Dehnungseigenschaften des Seils bestimmt.

## Patentansprüche

1. Seilsystem aus zwei Seilen (100, 101) zur Sicherung von Ästen (12) in Baumkronen gegen Beschädigung durch zu hohe Windlasten, die je als Hohlgeflechte aus mehreren Strängen (18) ausgebildet sind, die aus einer Vielzahl monofiler verdrillter Fäden (19) bestehen, wobei beide Seile (100, 101) im unbelasteten Zustand durch Stauchung derart aufweitbar sind, dass zwischen den Strängen Öffnungen (22) entstehen, durch die in die Innenkanäle (20) Ruckdämpfer (23) und/oder Spreizbänder (25) einschiebbar sind, wobei das erste Seil (100) auf eine erste Mindestbruchlast von 2 to gemäß ZTV-Baumpflege 2006 ausgelegt ist und im unbelasteten Zustand einen ersten Durchmesser (a₁) aufweist, und das zweite Seil (101) auf eine zweite Mindestbruchlast von 4 to gemäß ZTV-Baumpflege 2006 ausgelegt ist und im unbelasteten Zustand einen zweiten Durchmesser (a₂), der größer ist als der erste Durchmesser (a₁), aufweist, und die Seile (100, 101) im unbelasteten Zustand derart unterschiedliche Flechtwinkel (α₁, α₂) aufweisen, dass beide Seile bei Aufweitung Innenkanäle (20) mit demselben Durchmesser (b) ergeben, wobei der Flechtwinkel (α₁) des ersten Seils (100) kleiner ist als der (α₂) des zweiten Seils (101), und in die Innenkanäle (20) beider Seile Ruckdämpfer (23) mit demselben Durchmesser (b) einführbar sind, und die Ruckdämpfer (23) auf die zweite Mindestbruchlast abgestimmt sind, und beide Seile (100, 101) bei Belastung die Übergangsbereiche (26; 51, 52) der Ruckdämpfer (23, 50) an ihren sich verjüngenden Enden durch Haftreibung fest einspannen und den Ruckdämpfer (23, 50) dehnen.

2. Seil nach Anspruch 1, **dadurch gekennzeichnet, dass** das für eine Mindestbruchlast von 2 to ausgelegte Seil (100) bei einem Durchmesser im unbelasteten Zustand von 1,5 cm einen Flechtwinkel (α₁) von 15 - 40°, vorzugsweise 15-20°, aufweist.

3. Seilsystem nach Anspruch 2, **dadurch gekennzeichnet, dass** der Flechtwinkel (α₂) des auf die zweite Mindestbruchlast ausgelegten Seils (101) größer ist als der (α₁) des auf die erste Mindestbruchlast ausgelegten Seils (100).

4. Seil nach Anspruch 1, 2 oder 3, **dadurch gekennzeichnet, dass** das für eine Mindestbruchlast von 4 to ausgelegte Seil (101) bei einem Durchmesser im unbelasteten Zustand von 2,5 cm einen Flechtwinkel (α₂) aufweist, der größer ist als der Flechtwinkel (α₁) des für eine Mindestbruchlast von 2 to ausgelegten Seils (100) und 35 - 70° beträgt.

5. Seil nach einem der Ansprüche 1 - 4, **dadurch gekennzeichnet**, das das Gewicht des auf eine Mindestbruchlast von 2 to ausgelegten Seils (100) ca. 8,5 kg/100m beträgt.

6. Seil nach einem der Ansprüche 1 - 5, **dadurch gekennzeichnet, dass** das Gewicht des auf eine Mindestbruchlast von 4 to ausgelegten Seils (101) ca. 13 kg/100 m beträgt.

7. Seil nach einem der Ansprüche 1 - 6, **dadurch gekennzeichnet, dass** der Durchmesser (b) des Ruckdämpfers 3,5 cm beträgt.

8. Seil nach einem der Ansprüche 1 - 7, **dadurch gekennzeichnet, dass** der Ruckdämpfer (50) an seine beiden Enden (51, 52) in radialer Richtung eine Durchmessererweiterung aufweist.

9. Seil nach Anspruch 8, **dadurch gekennzeichnet, dass** die Durchmessererweiterung 5 - 10 % beträgt.

## Claims

1. Rope system, consisting of two ropes (100, 101), for securing branches (12) in treetops against damage due to excessively high winds, which ropes are formed as respective hollow braids made of a plurality of strands, consisting of a plurality of monofilament twisted threads (19), wherein both of the ropes are expandable by compression in the unloaded state, in such a way that openings (22) appear between the strands, through which shock absorbers (23) and/or expanding tapes (25) can be inserted into the inner channels (20) wherein, and the first rope (100) is constructed to have a minimum breaking strength of 2 tonnes in accordance with *ZTV-Baumpflege* (German tree care standard) 2006 and has in its unloaded state a first diameter (a₁), and the second rope (101) is constructed to have a minimum breaking strength of 4 tonnes in accordance with *ZTV-Baumpflege* 2006 and has in its unloaded state a second diameter (a₂) which is greater than the first diameter (a₁), and the ropes (100, 101) have, in their unloaded states, angles of twist (α₁, α₂) which differ in such a way that both ropes have inner channels (20) of the same diameter (b) when expanded, wherein the angle of twist (α₁) of the first rope (100) is less than that (α₂) of the second rope (101), and shock absorbers (23) of the same diameter (b) can be introduced into both ropes, and the shock absorbers (23) are adapted to the second minimum breaking strength, and both ropes (100, 101), when loaded, clamp the transition regions (26; 51, 52) of the shock absorbers (23, 50) securely at their tapered ends, via static friction, and extend the shock absorbers.

2. Rope according to claim 1, **characterised in that** the rope (100) constructed to have a minimum breaking strength of 2 tonnes has, given a diameter of 1.5 cm in the unloaded state, an angle of twist (α₁) of 15 - 40°, preferably 15 - 20°.

3. Rope system according to claim 2, **characterised in that** the angle of twist (α₂) of the rope (101) constructed to have the second minimum breaking strength is greater than that (α₁) of the rope (100) constructed to have the first minimum breaking strength.

4. Rope according to any one of claims 1, 2 and 3, **characterised in that** the rope (101) constructed to have a minimum breaking strength of 4 tonnes has, given a diameter of 2.5 cm in the unloaded state, an angle of twist (α₂) which is greater than that (α₁) of the rope (100) constructed to have a minimum breaking strength of 2 tonnes, and is 35 - 70°.

5. Rope according to any one of claims 1 - 4, **characterised in that** the weight of the rope (100) constructed to have a minimum breaking strength of 2 tonnes is approximately 8.5 kg/100 m.

6. Rope according to any one of claims 1- 5, **characterised in that** the weight of the rope (101) constructed to have a minimum breaking strength of 4 tonnes is approximately 13 kg/100 m.

7. Rope according to any one of claims 1 - 6, **characterised in that** the diameter (b) of the shock absorber is 3.5 cm.

8. Rope according to any one of claims 1-7, **characterised in that** the shock absorber (50) has an increase in the diameter in a radial direction at both ends (51, 52).

9. Rope according to claim 8, **characterised in that** the increase in diameter is 5-10 %.

## Revendications

1. Système de câble constitué de deux câbles (100, 101) pour protéger les branches (12) dans des cimes d'arbres contre des détériorations provoquées par des charges dues à l'action du vent, qui sont conçus chacun sous forme de tresses creuses constituées de plusieurs brins (18), lesquels sont constitués d'une pluralité de fils (19) torsadés monofilaires, les deux câbles (100, 101) pouvant être élargis dans l'état non chargé par refoulement de telle sorte que, entre les brins, il se forme des ouvertures (22) par lesquelles des amortisseurs d'à-coups (23) et/ou des bandes extensibles (25) peuvent être introduits dans les canaux intérieurs (20), le premier câble (100) étant conçu pour une première charge minimale de rupture de 2 tonnes selon ZTV-Baumpflege 2006 et présente un premier diamètre (a₁) dans l'état non chargé, et le second câble (101) étant conçu pour une seconde charge de rupture minimale de 4 tonnes selon ZTV-Baumpflege 2006 et présentant dans l'état non chargé un second diamètre (a₂) qui est supérieur au premier diamètre (a₁), et les câbles (100, 101) présentant dans l'état non chargé différents angles de tressage (α₁, α₂) de telle sorte que les deux câbles donnent en cas d'élargissement des canaux intérieurs (20) avec le même diamètre (b), l'angle de tressage (α₁) du premier câble (100) étant inférieur à l'angle de tressage (α₂) du second câble (101), et des amortisseurs d'à-coups (23) présentant le même diamètre (b) pouvant être introduits dans les canaux intérieurs (20) des deux câbles, et les amortisseurs d'à-coups (23) étant adaptés à la seconde charge de rupture minimale, et les deux câbles (100, 101) tendant fermement en cas de charge des zones de transition (26 ; 51, 52) des amortisseurs d'à-coups (23, 50) sur leurs extrémités qui se rétrécissent par frottement d'adhérence et étirant l'amortisseur d'à-coups (23, 50).

2. Câble selon la revendication 1, **caractérisé en ce que** le câble (100) conçu pour une charge de rupture minimale de 2 tonnes présente pour un diamètre dans l'état non chargé de 1,5 cm un angle de tressage (α₁) de 15 à 40°, de préférence 15 à 20°.

3. Système de câble selon la revendication 2, **caractérisé en ce que** l'angle de tressage (α₂) du câble (101) conçu pour la seconde charge de rupture minimale est supérieur à l'angle de tressage (α₁) du câble (100) conçu pour la première charge de rupture minimale.

4. Câble selon la revendication 1, 2 ou 3, **caractérisé en ce que** le câble (101) conçu pour une charge de rupture minimale de 4 tonnes présente pour un diamètre dans l'état non chargé de 2,5 cm un angle de tressage (α₂) qui est supérieur à l'angle de tressage (α₁) du câble (100) conçu pour une charge de rupture minimale de 2 tonnes et s'élève à 35 jusqu'à 70°.

5. Câble selon l'une quelconque des revendications 1 à 4, **caractérisé en ce que** le poids du câble (100) conçu pour une charge de rupture minimale de 2 tonnes est d'environ 8,5 k/100 m.

6. Câble selon l'une quelconque des revendications 1 à 5, **caractérisé en ce que** le poids du câble (101) conçu pour une charge de rupture minimale de 4 tonnes est d'environ 13 kg/100m.

7. Câble selon l'une quelconque des revendications 1 à 6, **caractérisé en ce que** le diamètre (b) de l'amortisseur d'à-coups est de 3,5 cm.

8. Câble selon l'une quelconque des revendications 1 à 7, **caractérisé en ce que** l'amortisseur d'à-coups (50) présente une extension de diamètre sur ses deux extrémités (51, 52) dans le sens radial.

9. Câble selon la revendication 8, **caractérisé en ce que** l'extension de diamètre est de 5 à 10 %.
